# EUROPEAN PATENT SPECIFICATION

(11) **EP 3 186 116 B1**
(45) Date of publication and mention of the grant of the patent: **12.02.2020**
(21) Application number: 15759612.3
(22) Date of filing: 28.08.2015
(51) Int. Cl.: B60S 3/06, A46B 13/00, F21V 33/00

(54) **A LIGHTED WASH COMPONENT WITH A SLIP RING CONNECTOR**
BELEUCHTETE WASCHKOMPONENTE MIT EINEM SCHLEIFRINGVERBINDER
COMPOSANT DE LAVAGE ÉCLAIRÉ AVEC UN CONNECTEUR À BAGUE COLLECTRICE

(30) Priority: 28.08.2014 US 201414471839
(43) Date of publication of application: 05.07.2017
(73) Proprietor: Belanger, Inc., Hamilton, OH 45011 (US)
(72) Inventor: BELANGER, Michael, J., Northville, MI 48167 (US); TURNER, Barry, S., Novi, MI 48375 (US); PRATER, Curtis, S., Warren, MI 48093 (US); SAYYAE, Michael, S., Westland, MI 48186 (US)
(74) Representative: Hoffmann Eitle
(86) International application number: PCT/US2015/047314
(87) International publication number: WO 2016/033393

(56) References cited:
- WO-A1-2013/067378
- US-A1- 2014 223 676

## Description

### TECHNICAL FIELD

The present disclosure relates generally to a vehicle wash component for use in cleaning a vehicle exterior in a vehicle wash facility. More specifically, the present disclosure relates to a lighted vehicle wash component for cleaning a vehicle exterior in a vehicle wash facility that yields enhanced aesthetics.

### BACKGROUND OF THE DISCLOSURE

Vehicle wash facilities are generally known to have dark and dirty environments, which can make them unattractive to customers and potential customers. This environment results, in part, from the fact that current rotary brush components typically employ a cylindrical central hub design that is densely populated with a plurality of washing elements such that the hub is not visible either at rest or during operation. This densely populated hub also serves to block a great deal of light to a vehicle occupant as the wash component approaches the vehicle during the vehicle wash process due to the large volume of the washing elements. This can result in a significant darkening of the vehicle interior and an unpleasant wash experience for the vehicle occupant. Combine this darkness with windshields and side windows that are often covered with soapy water and visibility for vehicle occupants within current vehicle wash facilities is very low.

Consequently, some wash owners have made an attempt to brighten this environment and enhance a user's wash experience though the use of lighted arches and signs, to create somewhat of a "carnival" feel. Many vehicle wash facilities also employ lights and lighted signs as a way to advertise extra wash services like tire shine, sealer wax, and triple foam as well as to drive traffic to and create more revenue for their vehicle wash facility. While these lighted arches and lighted signs may be effective in drawing consumer attention to the wash or these extra services they offer, the lighting is very selective and does little to improve the overall environment within the vehicle wash facility. Moreover, because of the configuration of existing rotary brush components, which block a vehicle occupant from seeing these lights during the vehicle wash process as well as the low visibility in existing washes, these lights cannot be seen by vehicle occupants during the vehicle wash process. As such, these lights therefore do not assist in making the vehicle wash process less intimidating.

Another disadvantage of current vehicle wash configurations is that they share a largely similar, utilitarian appearance that makes it correspondingly difficult for wash owners to provide a distinctive or memorable service offering to their customers. Lighted arches and signs do little to overcome this problem as any attempted branding created thereby is obstructed to vehicle occupants during the wash process, as discussed above.

It would thus be desirable to provide a vehicle wash component that addresses these issues.
WO 2013/067378 A1 relates to a component for a vehicle wash system that includes a frame and a hub portion that is rotatably connected to the frame. The hub portion has an inner surface, an outer surface and an axis of rotation. The hub portion includes a plurality of media elements secured thereto and arranged in a plurality of spaced apart rows that extend in a direction along the axis of rotation. The hub portion includes at least one translucent portion disposed on its outer surface. The translucent portion is disposed between a pair of adjacent rows of the plurality of spaced apart rows. The hub portion includes at least one illumination element for illuminating the at least one translucent portion such that said illuminated translucent portion is configured to be seen while the said hub portion rotates. This document is considered to be the prior art closest to the subject-matter of independent claim 1.

### SUMMARY OF THE DISCLOSURE

It is therefore an aspect of the present disclosure to provide a lighted vehicle wash component that yields improved aesthetics within the vehicle wash facility.

It is another aspect of the present disclosure to provide a lighted vehicle wash component that enhances a customer's experience during the wash process.

It is a further aspect of the present disclosure to provide a lighted vehicle wash component that can help create brand recognition for a vehicle wash facility.

It is a still another aspect of the present disclosure to provide a lighted vehicle wash component that can brighten the environment within a vehicle wash facility.

It is yet another aspect of the present disclosure to provide a lighted vehicle wash component that yields enhanced brightness and aesthetics for a vehicle wash facility when the wash component is at rest.
The invention is defined by claim 1.

In accordance with the above and the other aspects of the present disclosure, a lighted vehicle wash component is provided. The lighted vehicle wash component includes a frame portion and a drive mechanism supported by the frame portion. The component also includes a rotatable hub portion supported by the frame portion. The hub portion is in communication with the drive mechanism to effectuate its rotation about an axis of rotation. The component includes a plurality of wash media elements engageable with the hub portion and which are configured to engage a vehicle surface as the hub portion rotates. The plurality of wash media elements are arranged on the hub portion in a plurality of spaced apart rows. The component includes a plurality of lighting elements removeably engaging the hub portion. The lighting elements are disposed in an open area defined between each of the plurality of spaced apart rows. A slip ring assembly is in communication with the hub portion to allow the plurality of lighting elements to rotate about the axis of rotation as the hub portion rotates.

### BRIEF DESCRIPTION OF THE DRAWINGS

Other aspects of the present disclosure will be readily appreciated, as the same becomes better understood by reference to the following detailed description when considered in connection with the accompanying drawings wherein:
FIG 1 is a perspective view of a lighted vehicle wash component in accordance with an aspect of the present disclosure;
FIG 2 is a side view of the lighted vehicle wash component of FIG 1;
FIG 3 is a perspective view of an illumination source in accordance with an aspect of the present disclosure;
FIG 4 is a schematic cross-sectional view of a drive assembly, including slip ring assembly, for a lighted vehicle wash component in accordance with an aspect of the present disclosure;
FIG 5 is a perspective view of the lighted vehicle wash component in accordance with another aspect of the present disclosure; and
FIG 6 is an enlarged view of a portion of the lighted vehicle wash component, including slip ring assembly of FIG 5.

### DETAILED DESCRIPTION OF THE DISCLOSURE

According to an aspect, the present disclosure relates to a treatment component for a vehicle wash system. The vehicle wash system may be configured as a tunnel car wash where a vehicle is conveyed through the wash process by a conveyor or the like as is known in the art. Alternatively, the vehicle wash system may be configured as a roll-over type where the vehicle remains stationary and the various treatment components may be translated and/or moved with respect to the vehicle to perform the vehicle wash process. Other suitable wash processes and systems may also be employed as are known. According to an aspect, the vehicle wash system may be housed within a vehicle wash facility having an entrance end where a vehicle enters, an exit end where the vehicle leaves, and a vehicle treatment area where the vehicle is cleaned. It will be appreciated that the disclosed treatment component could also be employed in connection with a variety of other applications outside of a vehicle wash system, such as a manual or self-serve wash process.

According to a further aspect, an exemplary vehicle wash system into which the disclosed component may be incorporated can include a plurality of vehicle wash components that engage and/or treat the exterior of a vehicle as it passes through the vehicle wash facility to effectuate a vehicle wash process. For example, the components can include a rinse arch, which sprays water onto a vehicle to wet the exterior surface for further processing. Another component can include a bubble device that generates bubbles and emits them directly onto a vehicle exterior in order to provide a supply of soap for cleaning purposes. An exemplary bubble device that may be employed with the disclosed system is contained in Applicant's co-pending U.S. Patent Application Serial No. 13/864,813, entitled "A Vehicle Wash Component for Emitting Bubbles", filed April 17, 2013.

Other suitable devices for generating bubbles or foam may also be employed. Other components may include one or more top brushes for contacting a top exterior surface of a vehicle, a plurality of side brushes for contacting side exterior surfaces of a vehicle and a plurality of wrap brushes for contacting front and back surfaces of a vehicle. Another component may include wheel scrubbers for engaging vehicle wheels. A further component that may be employed can include a drying apparatus for removing water from the vehicle exterior. According to a further aspect, the system can include a wheel polishing device for treating vehicle wheels.

It will be appreciated that more, less or different wash components may be employed. Additionally, multiples of the same components may be employed as part of the system, as desired. Further, the components may take on a variety of different configurations. Moreover, the order, placement and sequence of the components within the system may also vary. According to an aspect, the components may be designed to engage and/or treat a vehicle disposed within the vehicle treatment area of the vehicle wash facility.

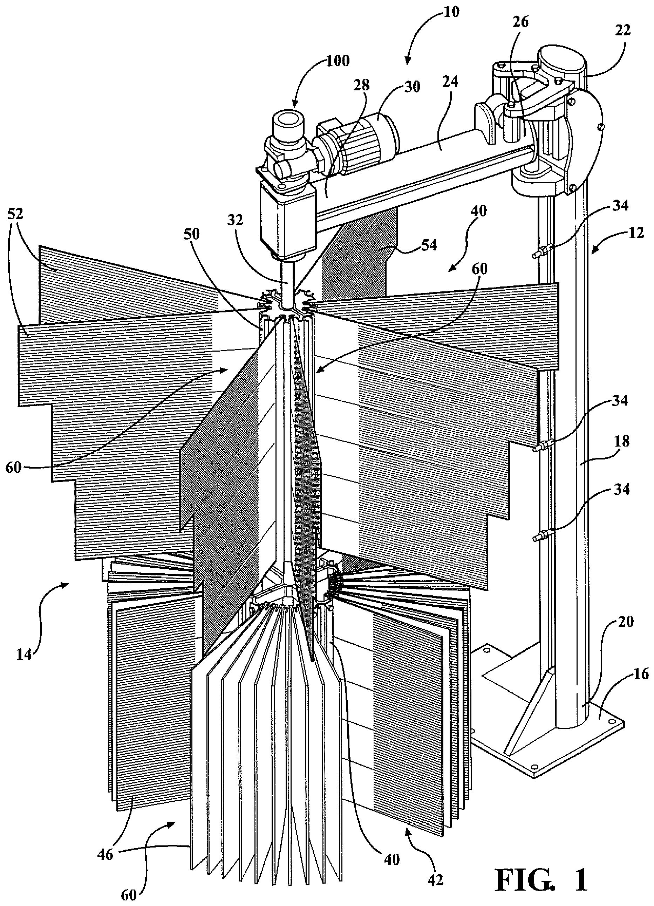

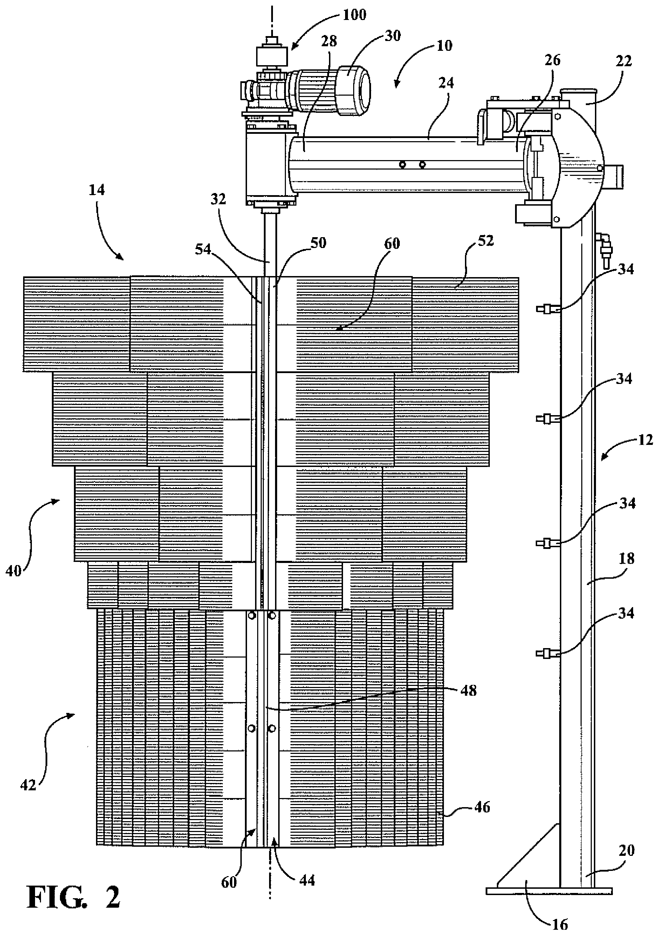

According to an aspect, the present disclosure relates to a lighted vehicle wash component **10** for treating an exterior surface of a vehicle, such as a painted surface. However, it will be appreciated that the component **10** can also treat other vehicle surfaces. With reference to FIGs 1 and 2, the vehicle wash component **10** may be configured as a side brush so as to contact side surfaces of a vehicle. It will be appreciated that other types of brushes, such as top brushes (as discussed below), may also be employed. According to an aspect, the vehicle wash component **10** may broadly consist of a frame portion **12** and a brush portion **14** supported by the frame portion **12.** The component **10** can be particularly suited for use in vehicle wash applications so that while it is being rotated by a suitable power source, such as a motor, it can be brought into contact with the exterior surface of a vehicle to perform a scrubbing or cleaning function to remove dirt or debris therefrom. It will be appreciated that the disclosed side brush can also perform other functions besides cleaning.

According to an aspect, the frame portion **12** can generally include a baseplate portion **16** and a vertical support **18.** According to an aspect, the baseplate portion **16** may be a generally flat structure that may be mounted to a floor of the vehicle wash facility. The vertical support **18** may have a lower end **20** that connects to the baseplate portion **16** and an upper end **22** disposed away from the baseplate portion **16.** A swingarm portion **24** having an inner end **26** and an outer end **28** may be connected to the upper end **22** of the vertical support **18** at its inner end **26.** According to an aspect, the swingarm portion **24** may be pivotally connected to the vertical support **18** to allow for adjustments of the swingarm portion **24** so as to accommodate varying vehicle lengths. It will be appreciated that the frame **12** may consist of more or less components and may take on a variety of different configurations. In accordance with another aspect, the components of the frame **12** may be constructed of a metal material and may be powder-coated to resist against corrosion. Alternatively, the components of the frame **12** may be constructed of a plastic or other suitable non-metal material. All or portions of the frame **12** could alternatively be formed as a single integral structure. It will be appreciated that the frame **12** could be mounted in a variety of other suitable ways, including to the walls or the ceiling of the wash facility. It will also be appreciated that the component **10** may be disposed adjacent a vehicle treatment area of a vehicle wash facility.

According to an aspect, the brush portion **14** may be secured to the outer end **28** of the swingarm portion **24.** The brush portion **14** may be configured to extend downwardly with respect to the swingarm portion **24** and can rotate about an axis that is oriented generally perpendicular to the swingarm portion **24.** According to another aspect, the brush portion **14** may pivot with respect to the outer end **28** such as in response to contact with a vehicle exterior. This can allow the brush portion **14** to provide increased cleaning capabilities, but also minimize any damage that could result from the application of greater than intended forces thereto. According to a further aspect, the brush portion **14** may be rotated about its axis of rotation by a drive mechanism **30,** which can include a drive shaft **32.** The drive mechanism **30** may configured as an electric drive motor, however, a variety of other suitable drive motors or drive mechanism may be employed to effectuate rotation of the brush portion **14** at predetermined speeds. The drive mechanism **30** can also be operated by a control system, which can also operate other components in the vehicle wash system. A suitable control system can include a computer with a processor and suitable memory for storing encoded logic and executing same based on certain programmed criteria.

According to an aspect, the brush portion **14** may generally include an upper brush assembly **40** and a lower brush assembly **42** that are in communication with the drive shaft **32.** The upper brush assembly **40** and the lower brush assembly **42** may rotate in unison in the same direction. Alternatively, they may rotate at different speeds. According to a further aspect, the brush assemblies **40, 42** could rotate in opposite directions at the same time. It will be appreciated that the component **10** could include more or less brush assemblies as desired. It will also be appreciated that the brush portion **14** could take on a variety of different configurations. The frame **12** can also include a plurality of spray orifices **34** for emitting a fluid such as water or soap onto the brush assemblies **40, 42.** It will be appreciated that the spray orifices **34** may be employed to emit other fluids such as foam or chemicals.

The lower brush assembly **42** can include a hub portion **44,** a plurality of wash media elements **46** in communication with the hub portion **44,** and a plurality of illumination elements **48.** Similarly, the upper brush assembly **40** can include a hub portion **50,** a plurality of wash media elements **52** in communication with the hub portion **50,** and a plurality of illumination elements **54.** The hub portions **44, 50** may take on a variety of different configurations, may be formed of a variety of suitable materials, and may be formed from a variety of suitable processes. An exemplary hub portion configuration is described in Applicant's co-pending U.S. Application Serial No. 14/456,636 entitled "Lighted Vehicle Wash Component," and filed on August 11, 2014.

According to another aspect, the wash media elements **46, 52** may be removeably secured to the hub portions **44, 50** by a variety of suitable mechanism. This removable attachment to the hub portions **44, 50** allows the media elements **46, 52** to be removed as desired such as for replacement purposes, while keeping them securely in place as the hub portions **44, 52** rotate. According to an aspect, the wash media elements **46, 52** may be constructed of self-supporting materials such as foam so that they substantially retain their shape at all times and do not droop or sag while the vehicle wash component **10** is at rest. According to another aspect, the wash media elements **46, 52** may be constructed of a soft cloth material. It will be appreciated that the media elements may be formed of a variety of different materials and may have other suitable configurations. According to a further aspect, the media elements **46, 52** can have a variety of different configurations and may be secured to the hub portions **44, 52** in a variety of suitable ways. Exemplary wash media element configurations and methods of attachment of same are disclosed in Applicant's co-pending U.S. Patent Application Serial No. 14/456,636 entitled "Lighted Vehicle Wash Component," and filed on August 11, 2014.

According to another aspect, the media elements **46, 52** may be arranged on the hub portions **44, 50** in spaced apart rows such that there are open areas **60** between the spaced apart rows. As shown, the spaced apart rows and the open areas **60** may be oriented generally in a straight line and generally parallel to the axis or rotation. It will also be appreciated that the media elements **46, 52** may be arranged in rows having a variety of different configurations. According to a further aspect, the illumination elements **48, 54** may be disposed in the open areas **60** such that they may be visible between the rows of the media elements **46, 52.** According to an aspect, the illumination elements **48, 54** may be secured to the hub portions **44, 50** in a variety of suitable ways. According to one aspect, the illumination elements **48, 54** may be clipped to the hub portions **44, 50** such as by a conventional clip. According to another aspect, the illumination elements **48, 54** may be removeably disposed in illumination element receptacles formed in the exterior surface of the hub portions **44, 50,** which may be configured to receive at least one illumination element **48, 54** therein. It will be appreciated that the illumination elements may be secured to the hub portion in a variety of different ways and by a variety of different structures. Various combinations of attachment mechanism may also be employed. An exemplary illumination element receptacle is disclosed in Applicant's co-pending U.S. Patent Application Serial No. 14/456,636 entitled "Lighted Vehicle Wash Component," and filed on August 11, 2014.

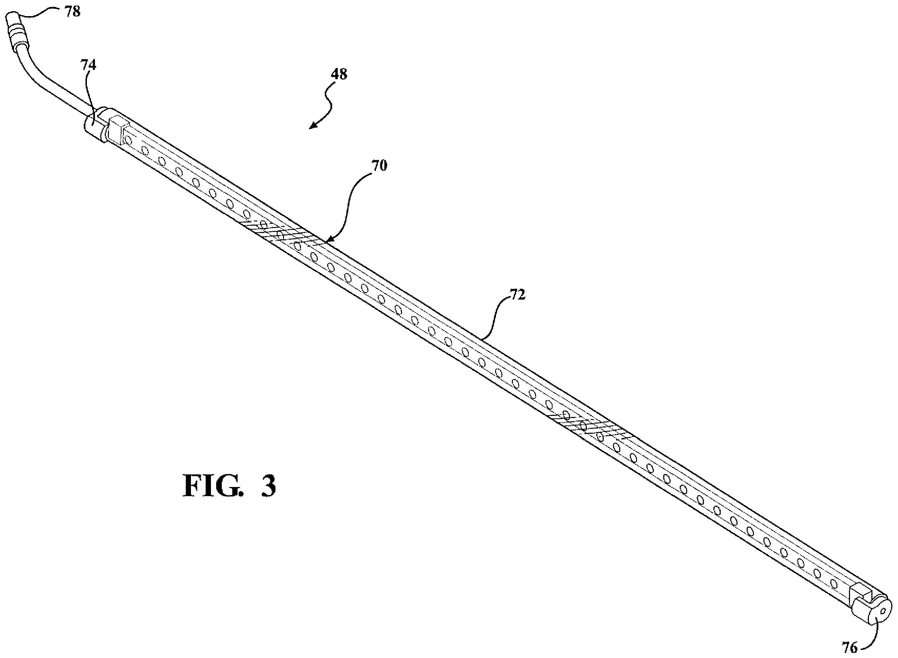

According to an aspect and as shown in FIG 3, the illumination elements **48, 54** could be configured as an elongated LED light strip **70.** According to another aspect, the illumination elements **48, 54** could be configured to have a length that matches or substantially matches the length of the respective hub portions **44, 50** to which they are attached. Alternatively, the illumination elements **48, 50** could be configured with a length that is shorter or longer than the length of the hub portion **44, 50** to which they are attached. It will be appreciated that a variety of suitably configured light sources or illumination elements could be employed. According to a further aspect, the LED light strip **70** could be encased in a transparent outer tubing **72** that can provide protection for the LED light strip **70,** including from water and chemicals that may exist in the vehicle wash process. The LED light strip **70** can also include an upper end cap **74** and a lower end cap **76** that may each be configured to engage an illumination receptacle in the hub portion as described in Applicant's co-pending U.S. Patent Application Serial No. 14/471,839 entitled "Lighted Vehicle Wash Component," and filed on August 11, 2014.

According to a further aspect, the LED light strip **70** can also include an electrical connector **78** that can allow for the provision of power thereto to effectuate illumination thereof. It will be appreciated that a variety of different types of illumination sources may be employed. It will also be appreciated that the illumination sources can have a variety of different sizes and configurations. As shown, the illumination elements can be uniformly spaced around the outer surface of the hub portions **44, 50.** Any number of illumination elements may be employed and their location may obviously vary. However, according to an aspect, they may be secured to the hub portions **44, 50** in order that the illumination elements **48, 54** may rotate as the hub portions **44, 50** rotate, as discussed in more detail below.

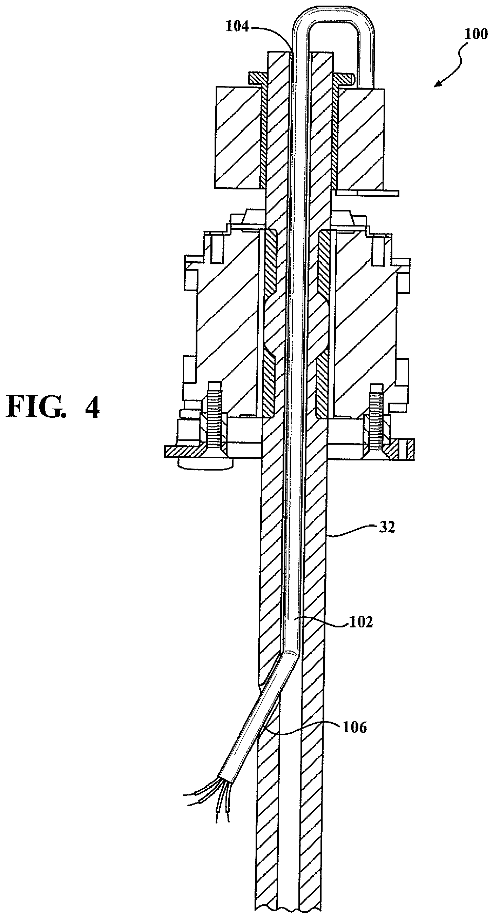

According to an aspect and with reference to FIG 4, the plurality of illumination elements **48, 54** may be in communication with a slip ring assembly **100** so as to permit rotation of the illumination elements **48, 54** with their respective hub portion **44, 50** as they rotate. According to an aspect, the slip ring assembly **100** may be a conventional multichannel assembly that accommodates providing electrical power to multiple electrical components at the same time with the connection from each individual component located in one of the separate channels being combined into a multi-conductor cable **102,** as will be understood by one of ordinary skill in the art. According to an aspect, the multi-conductor cable **102** may extend from the slip ring assembly **100** downward through a hollow **104** formed in the drive shaft **32.** The conductor cable **102** may then exit the hollow **104** by way of a clearance opening **106** formed in a wall of the shaft **32** such that the electrical connections are available to the exterior of the drive shaft **32.**

According to an aspect, the conductor cable **102** may be configured to make electrical connection with the connectors **78** of each of the illumination elements **48, 54** in parallel. This can be accomplished via a conventional wire harness as will be understood by one of ordinary skill in the art. It will be appreciated that these electrical connections can be accomplished in a variety of other suitable ways.

As will be appreciated, the component **10** may be provided with a power source, such as a DC power supply, which may, for example, consist of wires and/or cables from an off-board power supply. According to an aspect, the slip ring assembly **100** can thus provide electrical service from the wires or cables on the component **10** to the illumination elements **48, 54** carried by the hub portions **44, 50.** By this arrangement, the slip ring assembly **100** can allow the hub portions **44, 50** to rotate around the axis without causing a "wind-up" problem of the electrical wires needed to power the illumination elements **48, 54** that are configured to rotate therewith. It will be appreciated that other electrical devices can be carried by the hub portions **44, 50,** including sensors or limit switches to provide signals to the control system to provide a variety of different feedbacks regarding the brush assembly itself or an associated vehicle with which the brush communicates.

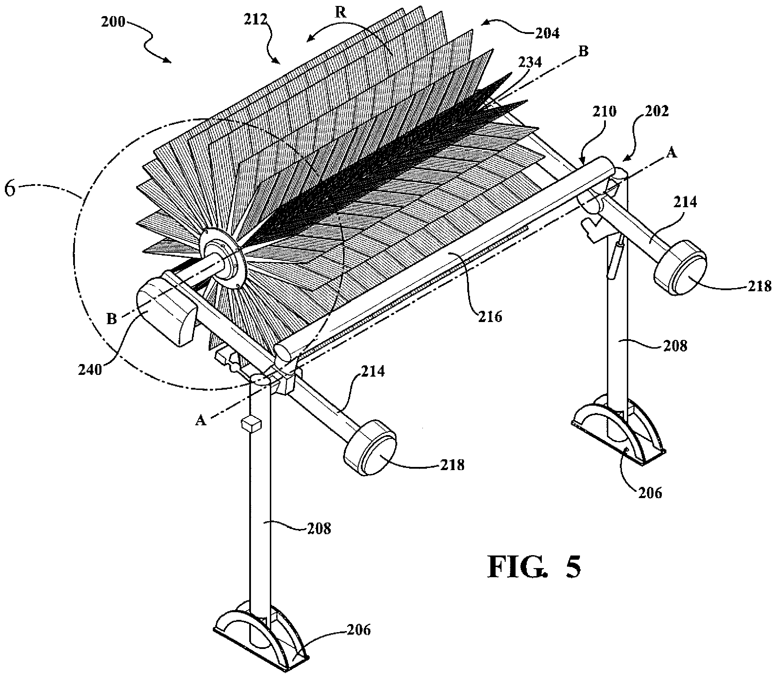

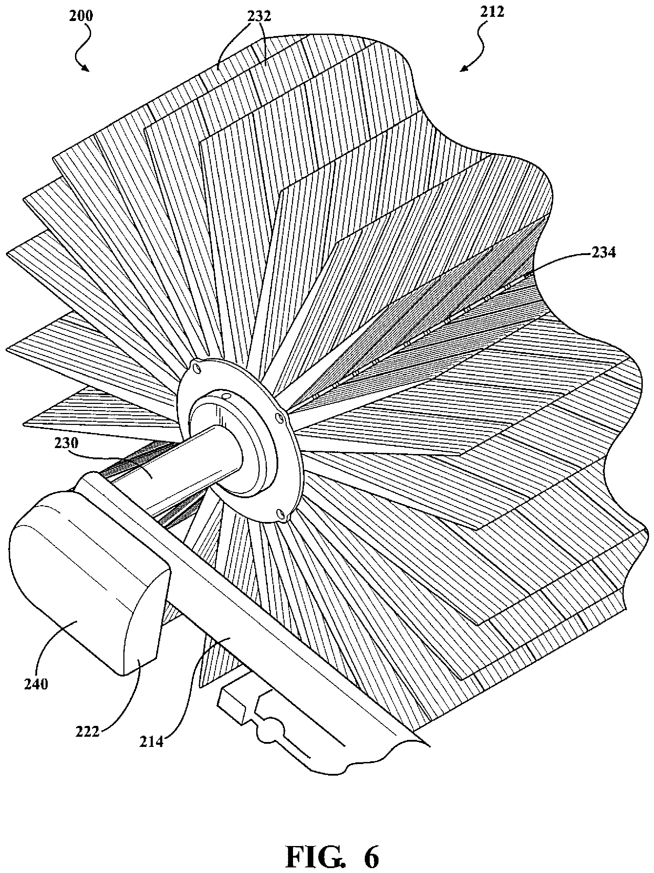

With reference to FIGs 5 and 6, the vehicle wash component **200** may be a top brush configured to contact a top surface of a vehicle. According to an aspect, the vehicle wash component **200** may broadly consist of a frame **202** and a brush portion **204** supported by the frame **202.** The component **200** can be particularly suited for use in vehicle wash applications so that while it is being rotated by a suitable power source, such as a motor, it can be brought into contact with the exterior surface of a vehicle to perform a scrubbing or cleaning function to remove dirt or debris therefrom. It will be appreciated that the disclosed top brush can also perform other functions besides cleaning.

According to an aspect, the frame **202** can generally include a pair of baseplate portions **206** and a pair of vertical supports **208.** It will be appreciated that the frame **202** may consist of more or less components. In accordance with another aspect, the components of the frame **202** may be constructed of a metal material and may be powder-coated to resist against corrosion. Alternatively, the components of the frame **202** may be constructed of a plastic or other suitable non-metal material. All or portions of the frame **202** could alternatively be formed as a single integral structure. It will be appreciated that the frame **202** could be mounted in a variety of other suitable ways, including to the walls or the ceiling of the wash facility. An exemplary frame is described in detail in Applicant's co-pending U.S. Patent Application Serial No. 14/456,636 entitled "Lighted Vehicle Wash Component," and filed on August 11, 2014.

According to an aspect, the brush portion **204** may include a generally u-shaped counterbalance frame **210** for supporting a brush assembly **212.** According to a further aspect, the u-shaped frame **210** may be pivotally connected to the frame **202** and can include a pair of pivotal arm portions **214** and a cross-support arm **216** that may extend between the pivotal arm portions **214.** Pursuant to a further aspect, a counterbalance weight **218** may be secured to each of the arm portions **214** to allow pivotal rotation of the arms about an axis A-A so as to raise and lower the brush assembly **212** mounted on the cross-support arm **216.** The brush assembly **212** may be driven in rotation about an axis B-B in the direction of the arrow R by a suitable control mechanism as dictated by a control system. A suitable control system can include a computer with a processor and suitable memory for storing encoded logic and executing same based on certain programmed criteria. In operation, the brush assembly **212** may be moved between a vehicle engaging position and a retracted position under computer control by actuating cylinders, such as hydraulic or pneumatic cylinders, which can extend between the pivotal arm portions **214** and the vertical supports **208.** According to another aspect, the brush assembly **212** may be moved and controlled in a variety of other suitable ways. In accordance with an aspect, a drive mechanism **222** may be in communication with the brush assembly **204** to cause rotation thereof at predetermined speeds in the direction R. The motor can also be operated by the control system.

According to an aspect, the brush assembly **212** may generally include a hub portion **230** and a plurality of wash media segments **232.** The brush assembly **212** may have a variety of different configurations and the plurality of wash media segments **232** may be secured for communication with the hub portion **230** in a variety of suitable ways. Exemplary brush assembly configurations and wash media segment configurations and securing apparatus are disclosed in Applicant's co-pending U.S. Application Serial No. 14/456,636 entitled "Lighted Vehicle Wash Component,".

According to an aspect, the hub portion **230** can generally extend between the pivotal arm portions **214.** The hub portion **230** may be in communication with a drive mechanism **222** to effectuate rotation thereof, as will be understood by one of ordinary skill. It will be appreciated that more or less wash media segments may be employed. It will also be appreciated that the wash media segments **232** could have different shapes, sizes, and configurations.

In accordance with another aspect, the brush assembly **212** may include a plurality of illumination elements or light elements **234** interspersed amongst the wash media elements **232.** According to another aspect, each of the plurality of light elements **234** may be disposed between adjacent rows of the plurality of media elements **232.** According to one aspect, the wash media elements **232** may be oriented on the hub portion **230** such that linear rows are created and whereby each of the light elements **234** may be oriented in a linear fashion between selected rows. It will be appreciated that any number of light sources may be employed as part of the component **200.** According to an aspect, the light elements **234** may be disposed on the brush assembly **212** so that light emitted from the light elements **234** may be visible from the exterior of the component **200** at all times, including when the component is rotating. Exemplary configurations of lighting elements and their placement and attachment are disclosed in Applicant's co-pending U.S. Application Serial No. 14/456,636 entitled "Lighted Vehicle Wash Component," and filed on August 11, 2014.

According to an aspect, the illumination elements **234** may be LED strips, consisting of individual LEDs that are connected through a slip ring assembly **240** to a power source so as to emit light from the brush assembly **212** during brush operation. The utilization of the slip ring assembly **240** can allow illumination elements **234** to be mounted for rotation with the hub portion **230** as it rotates without any "windup" of electrical wires. The slip ring assembly **240** may have the same configuration and operate the same as the slip ring assembly **100** as described above.

The specification and illustrations of the embodiments described herein are intended to provide a general understanding of the structure of the various embodiments. The specification and illustrations are not intended to serve as an exhaustive and comprehensive description of all of the elements and features of apparatus and systems that use the structures or methods described herein. Many other embodiments may be apparent to those of skill in the art upon reviewing the disclosure. Other embodiments may be used and derived from the disclosure, such that a structural substitution, logical substitution, or another change may be made without departing from the scope of the disclosure. Accordingly, the disclosure is to be regarded as illustrative rather than restrictive.

Certain features are, for clarity, described herein in the context of separate embodiments, may also be provided in combination in a single embodiment. Conversely, various features that are, for brevity, described in the context of a single embodiment, may also be provided separately or in any sub combination. Further, reference to values stated in ranges includes each and every value within that range.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

The above-disclosed subject matter is to be considered illustrative, and not restrictive, and the appended claims are intended to cover any and all such modifications, enhancements, and other embodiments that fall within the scope of the present invention. Thus, to the maximum extent allowed by law, the scope of the present invention is to be determined by the broadest permissible interpretation of the following claims, and shall not be restricted or limited by the foregoing detailed description.

Although only a few exemplary embodiments have been described in detail above, those skilled in the art will readily appreciate that many modifications are possible in the exemplary embodiments without materially departing from the novel teachings and advantages of the embodiments of the present disclosure. Accordingly, all such modifications are intended to be included within the scope of the embodiments of the present disclosure as defined in the following claims. In the claims, means-plus-function clauses are intended to cover the structures described herein as performing the recited function.

## Claims

1. A vehicle wash component (10), comprising:
a rotatable hub portion (44, 30) having an axis of rotation and a hollow middle portion;
a drive mechanism (30) in communication with the hub portion (44, 50) to effectuate rotation thereof about the axis of rotation;
a plurality of wash media elements (46, 52) engaged with the hub portion (44, 50) that are configured to engage a vehicle surface as the hub portion (44, 50) rotates, the plurality of wash media elements (46, 52) being arranged in a plurality of spaced apart arrays, which define open areas between the adjacent ones of the plurality of spaced apart arrays;
one or more lighting elements (48) disposed on the hub portion and in an open area of the hub portion (44, 50); **characterised in that** the vehicle wash component further comprises
a slip ring assembly (100) having an electrical connection and a plurality of channels, the electrical connection passing through the hollow middle portion of the hub portion (44, 50) and the plurality of the channels allowing power to be supplied from a power source to each of the lighting elements (48) to permit their illumination and rotation while the hub portion rotates about the axis of rotation.

2. The component of claim 1, wherein the plurality of lighting elements (48) are removeably secured to the hub portion (44, 50) and/or
wherein the plurality of lighting elements (48) are mechanically clipped to the hub portion (44, 50) and/or
wherein the plurality of lighting elements (48) are disposed in retaining channels formed in the hub portion.

3. The component of claim 2, wherein the plurality of lighting elements (48) are configured as LED strips.

4. The component of one of the preceding claims, wherein the wash media elements (46, 52) are self-supporting and extend generally perpendicular from the hub portion.

5. The vehicle wash component (10) of one of the preceding claims, further comprising:
a frame portion (12) supporting the drive mechanism (30)
the rotatable hub portion (44, 54) being supported by the frame portion (12) and in communication with the drive mechanism (30) to effectuate rotation of the hub portion (44, 50) about an axis of rotation;
the one or more lighting elements disposed in a plurality of open areas defined between each of the wash media elements (46, 52);
the slip ring assembly (100) being disposed on the frame (12) and in communication with the rotatable hub portion.

6. The component of claim 5, wherein the axis of rotation is oriented generally vertical to ground or
wherein the axis of rotation is oriented generally horizontal to ground.

7. The component of claim 5 or 6, wherein the plurality of media elements (46, 52) are arranged in a plurality of spaced apart rows, which are oriented parallel to the axis of rotation.

8. A vehicle wash system, comprising:
the vehicle wash component (10) of one of the preceding claims.

9. The system of claim 8,
wherein each of the plurality of lighting elements (48) is disposed in a separate open area defined between the plurality of wash media elements (46, 52).

10. The system of claim 9, wherein the slip ring assembly (100) is disposed on a frame portion (12) which supports the drive mechanism (30).

11. The system of one of claims 8 to 10, wherein the plurality of media elements (46, 52) are arranged in a plurality of spaced apart rows, which are oriented parallel to the axis of rotation.

## Patentansprüche

1. Fahrzeugwaschkomponente (10), Folgendes umfassend:
einen drehbaren Nabenabschnitt (44, 30), der eine Drehachse und einen hohlen Mittenabschnitt aufweist;
einen Antriebsmechanismus (30) in Kommunikation mit dem Nabenabschnitt (44, 50), um dessen Drehung um die Drehachse auszuführen;
eine Vielzahl von Waschmedienelementen (46, 52), die in den Nabenabschnitt (44, 50) eingreifen, die konfiguriert sind, um in eine Fahrzeugoberfläche einzugreifen, während sich der Nabenabschnitt (44, 50) dreht, wobei die Vielzahl von Waschmedienelementen (46, 52) in einer Vielzahl beabstandeter Anordnungen eingerichtet ist, die offene Flächen zwischen den benachbarten der Vielzahl beabstandeter Anordnungen definieren;
ein oder mehrere Beleuchtungselemente (48), die auf dem Nabenabschnitt und in einer offenen Fläche des Nabenabschnitts (44, 50) angeordnet sind;
**dadurch gekennzeichnet, dass** die Fahrzeugwaschkomponente weiter umfasst
eine Schleifringbaugruppe (100), die eine elektrische Verbindung und eine Vielzahl von Kanälen aufweist, wobei die elektrische Verbindung durch den hohlen Mittenabschnitt des Nabenabschnitts (44, 50) hindurchführt, und die Vielzahl von Kanälen es erlaubt, von einer Stromquelle zu jedem der Beleuchtungselemente (48) Leistung zu liefern, um deren Beleuchtung und Drehung zu erlauben, während sich der Nabenabschnitt um die Drehachse dreht.

2. Komponente nach Anspruch 1, wobei die Vielzahl von Beleuchtungselementen (48) abnehmbar an dem Nabenabschnitt (44, 50) gesichert ist, und/oder
wobei die Vielzahl von Beleuchtungselementen (48) mechanisch an den Nabenabschnitt (44, 50) geclippt ist, und/oder
wobei die Vielzahl von Beleuchtungselementen (48) in Rückhaltekanälen angeordnet ist, die in dem Nabenabschnitt gebildet sind.

3. Komponente nach Anspruch 2, wobei die Vielzahl von Beleuchtungselementen (48) als LED-Streifen konfiguriert ist.

4. Komponente nach einem der vorstehenden Ansprüche, wobei die Waschmedienelemente (46, 52) selbsttragend sind und sich im Allgemeinen senkrecht von dem Nabenabschnitt erstrecken.

5. Fahrzeugwaschkomponente (10) nach einem der vorstehenden Ansprüche, weiter Folgendes umfassend:
einen Rahmenabschnitt (12), der den Antriebsmechanismus (30) trägt,
wobei der drehbare Nabenabschnitt (44, 54) von dem Rahmenabschnitt (12) getragen wird und mit dem Antriebsmechanismus (30) in Kommunikation steht, um Drehung des Nabenabschnitts (44, 50) um die Drehachse auszuführen;
das eine oder die mehreren Beleuchtungselemente, die in einer Vielzahl offener Flächen angeordnet sind, die zwischen jedem der Waschmedienelemente (46, 52) definiert sind;
wobei die Schleifringbaugruppe (100) auf dem Rahmen (12) angeordnet ist und mit dem drehbaren Nabenabschnitt in Kommunikation steht.

6. Komponente nach Anspruch 5, wobei die Drehachse im Allgemeinen vertikal zu dem Boden ausgerichtet ist, oder
wobei die Drehachse im Allgemeinen horizontal zu dem Boden ausgerichtet ist.

7. Komponente nach Anspruch 5 oder 6, wobei die Vielzahl von Medienelementen (46, 52) in einer Vielzahl beabstandeter Reihen, die parallel zu der Drehachse ausgerichtet sind, angeordnet ist.

8. Fahrzeugwaschsystem, Folgendes umfassend:
die Fahrzeugwaschkomponente (10) nach einem der vorstehenden Ansprüche.

9. System nach Anspruch 8,
wobei jedes der Vielzahl von Beleuchtungselementen (48) in einer separaten offenen Fläche angeordnet ist, die zwischen der Vielzahl von Waschmedienelementen (46, 52) definiert ist.

10. System nach Anspruch 9, wobei die Schleifringbaugruppe (100) auf einem Rahmenabschnitt (12) angeordnet ist, der den Antriebsmechanismus (30) trägt.

11. System nach einem der Ansprüche 8 bis 10, wobei die Vielzahl von Medienelementen (46, 52) in einer Vielzahl beabstandeter Reihen, die zu der Drehachse parallel ausgerichtet sind, angeordnet ist.

## Revendications

1. Composant de lavage de véhicule (10) comprenant :
une portion de moyeu rotatif (44, 30) présentant un axe de rotation et une portion médiane creuse ;
un mécanisme d'entraînement (30) en communication avec la portion de moyeu (44, 50) pour effectuer sa rotation autour de l'axe de rotation ;
une pluralité d'éléments de milieu de lavage (46, 52) mis en prise avec la portion de moyeu (44, 50) qui sont configurés pour mettre en prise une surface de véhicule lorsque la portion de moyeu (44, 50) tourne, la pluralité d'éléments de milieu de lavage (46, 52) étant agencée dans une pluralité de réseaux espacés, qui définissent des zones ouvertes entre les certains adjacents de la pluralité de réseaux espacés ;
un ou plusieurs éléments d'éclairage (48) disposés sur la portion de moyeu et dans une zone ouverte de la portion de moyeu (44, 50) ;
**caractérisé en ce que** le composant de lavage de véhicule comprend en outre
un ensemble de bague collectrice (100) présentant une connexion électrique et une pluralité de canaux, la connexion électrique passant au travers de la portion médiane creuse de la portion de moyeu (44, 50) et la pluralité de canaux permettant à la puissance d'être fournie d'une source de puissance à chacun des éléments d'éclairage (48) pour permettre leur éclairage et rotation alors que la portion de moyeu tourne autour de l'axe de rotation.

2. Composant selon la revendication 1, dans lequel la pluralité d'éléments d'éclairage (48) est fixée de manière amovible à la portion de moyeu (44, 50) et/ou
dans lequel la pluralité d'éléments d'éclairage (48) est mécaniquement clipsée à la portion de moyeu (44, 50) et/ou
dans lequel la pluralité d'éléments d'éclairage (48) est disposée dans des canaux de retenue formés dans la portion de moyeu.

3. Composant selon la revendication 2, dans lequel la pluralité d'éléments d'éclairage (48) est configurée comme des bandes de DEL.

4. Composant selon l'une des revendications précédentes, dans lequel les éléments de milieu de lavage (46, 52) sont autoportants et s'étendent généralement perpendiculairement depuis la portion de moyeu.

5. Composant de lavage de véhicule (10) selon l'une des revendications précédentes, comprenant en outre :
une portion de cadre (12) supportant le mécanisme d'entraînement (30) ;
la portion de moyeu rotatif (44, 54) étant supportée par la portion de cadre (12) et en communication avec le mécanisme d'entraînement (30) pour effectuer la rotation de la portion de moyeu (44, 50) autour d'un axe de rotation ;
les un ou plusieurs éléments d'éclairage disposés dans une pluralité de zones ouvertes définies entre chacun des éléments de milieu de lavage (46, 52) ;
l'ensemble de bague collectrice (100) étant disposé sur le cadre (12) et en communication avec la portion de moyeu rotatif.

6. Composant selon la revendication 5, dans lequel l'axe de rotation est orienté généralement verticalement par rapport au sol ou
dans lequel l'axe de rotation est orienté généralement horizontalement par rapport au sol.

7. Composant selon la revendication 5 ou 6, dans lequel la pluralité d'éléments de milieu (46, 52) est agencée dans une pluralité de rangées espacées qui sont orientées parallèlement à l'axe de rotation.

8. Système de lavage de véhicule, comprenant :
le composant de lavage de véhicule (10) selon une des revendications précédentes.

9. Système selon la revendication 8,
dans lequel chacun de la pluralité d'éléments d'éclairage (48) est disposé dans une zone ouverte séparée définie entre la pluralité d'éléments de milieu de lavage (46, 52).

10. Système selon la revendication 9, dans lequel l'ensemble de bague collectrice (100) est disposé sur une portion de cadre (12) qui supporte le mécanisme d'entraînement (30).

11. Système selon l'une des revendications 8 à 10, dans lequel la pluralité d'éléments de milieu (46, 52) est agencée dans une pluralité de rangées espacées qui sont orientées parallèlement à l'axe de rotation.
